(19) **Europäisches Patentamt** / **European Patent Office** / **Office européen des brevets**

(11) **EP 4 525 264 A1**

(12) **EUROPEAN PATENT APPLICATION**
published in accordance with Art. 153(4) EPC

(43) Date of publication:
**19.03.2025 Bulletin 2025/12**

(21) Application number: **24750501.9**

(22) Date of filing: **26.01.2024**

(51) International Patent Classification (IPC):
*H02J 7/00* (2006.01)   *H01M 10/44* (2006.01)

(52) Cooperative Patent Classification (CPC):
**H01M 10/44; H02J 7/00**

(86) International application number:
**PCT/KR2024/001272**

(87) International publication number:
**WO 2024/162699 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023 KR 20230012727**

(71) Applicant: **LG Energy Solution, Ltd.
Seoul 07335 (KR)**

(72) Inventors:
• **KWON, Hyun Cheol
Daejeon 34122 (KR)**

• **PARK, Jiwon
Daejeon 34122 (KR)**
• **PARK, Pil Kyu
Daejeon 34122 (KR)**
• **SON, Chanhee
Daejeon 34122 (KR)**
• **YANG, Jieung
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **DEVICE AND METHOD FOR BATTERY DISCHARGING FOR SHIPPING**

(57)   An apparatus for performing pre-shipment discharge of one or more battery cells according to embodiments of the present invention may include a charger-discharger connected to the one or more battery cells and configured to charge or discharge the one or more battery cells; a measuring unit configured to monitor each battery cell and provide related measurement values to a controller; and a controller configured to control the charger-discharger to perform a first discharge stage on the one or more battery cells according to a first current value based on a predetermined discharge capacity and to perform a second discharge stage on the one or more battery cells according to a second current value which varies according to a detailed time period based on a predetermined voltage, wherein the controller controls the charger-discharger to perform the first discharge stage and the second discharge stage before shipping the one or more battery cells.

[Figure 3]

## Description

This application claims priority to and the benefit of Korean Patent Application No.10-2023-0012727 filed in the Korean Intellectual Property Office on January 31, 2023 the entire contents of which are incorporated herein by reference.

[Technical Field]

The present invention relates to an apparatus and method for pre-shipment discharging of batteries, and more particularly, to an apparatus and method for performing pre-shipment discharge of one or more battery cells using multiple discharge steps.

[Background Art]

A secondary battery is a battery that can be recharged and reused even after being discharged. The secondary battery can be used as an energy source for small devices such as mobile phones, tablet PCs and vacuum cleaners, and also used as an energy source for medium and large devices such as an energy storage system (ESS) for automobiles and smart grids. The secondary battery is applied to a system in a form of an assembly such as a battery module in which a plurality of battery cells is connected in series and parallel or a battery pack in which battery modules are connected in series and parallel according to system requirements.

Batteries may be broadly categorized into cylindrical, pouch, and prismatic types depending on their shapes. These batteries are the same in that they are manufactured by combining the separator and the electrolyte after manufacturing a cathode plate and an anode plate, but they may have different shapes depending on how they are assembled and packaged.

Generally, batteries can be manufactured through an electrode process, an assembly process, an activation (formation) process, and a packing process. Among these processes, in the activation process, charging and discharging operations are repeatedly performed to activate battery cells. The charging and discharging operations take a lot of time, and the charge and discharge time is proportional to the investment cost for charge and discharge devices, and thus, it has a significant impact on the profitability of the battery.

Meanwhile, among the charging and discharging operations required during the activation process, pre-shipment charging or pre-shipment discharging is performed immediately before battery shipment. The pre-shipment charging has a problem that the charge time increases and the pre-shipment discharging has a problem that the voltage deviation between cells increases. Therefore, there is a need for a charging or discharging method that can improve voltage deviation and shorten the charging and discharging process time.

[Detailed Description of the Invention]

[Technical Problem]

To obviate one or more problems of the related art, embodiments of the present disclosure provide a battery pre-shipment discharge apparatus for performing pre-shipment discharge of one or more battery cells.

To obviate one or more problems of the related art, embodiments of the present disclosure also provide a method for performing pre-shipment discharge of one or more battery cells.

[Technical Solution]

In order to achieve the objective of the present disclosure, an apparatus for performing pre-shipment discharge of one or more battery cells may include a charger-discharger connected to the one or more battery cells and configured to charge or discharge the one or more battery cells; a measuring unit configured to monitor each battery cell and provide related measurement values to a controller; and a controller configured to control the charger-discharger to perform a first discharge stage on the one or more battery cells according to a first current value based on a predetermined discharge capacity and to perform a second discharge stage on the one or more battery cells according to a second current value which varies according to a detailed time period based on a predetermined voltage, wherein the controller controls the charger-discharger to perform the first discharge stage and the second discharge stage before shipping the one or more battery cells.

Here, the controller may terminate the first discharge stage in the instance that the predetermined discharge capacity is reached while performing the first discharge stage.

In addition, the controller may terminate the second discharge stage for each battery cell in the instance that the voltage of each battery cell reaches the predetermined voltage while performing the second discharge stage.

The first current value may be greater than the second current value.

The second discharge stage may include three or more detailed discharge steps using the same or different charge and discharge rates.

A charge/discharge rate of the detailed discharge step temporally located last among the three or more detailed discharge steps included in the second discharge stage may be determined to be a smaller value than the charge/discharge rates applied to the remaining detailed discharge steps.

For example, the second discharge stage may include a first detailed discharge step in which discharging is performed using a first charge/discharge rate; a second detailed discharge step in which discharging is performed using a second charge/discharge rate; a third detailed discharge step in which discharging is performed using a third charge/discharge rate; a fourth detailed discharge step in which discharging is performed using a fourth charge/discharge rate; and a fifth detailed discharging step in which discharging is performed using a fifth charge/discharge rate.

According to an example, the first charge/-discharge rate, the second charge/discharge rate, the third charge/discharge rate, and the fourth charge/-discharge rate may be determined to be the same value, and the fifth charge/discharge rate may be determined to be smaller than the first charge/discharge rate, the second charge/discharge rate, the third charge/discharge rate, and the fourth charge/discharge rate.

According to another example, the first charge/-discharge rate, the second charge/discharge rate, the third charge/discharge rate, the fourth charge/discharge rate, and the fifth charge/discharge rate may be determined to be different values that decrease sequentially. Here, the third charge/discharge rate may be determined according to the first charge/discharge rate and the fifth charge/discharge rate.

Meanwhile, the controller may fully charge the one or more battery cells before performing the first discharge stage.

According to another embodiment of the present disclosure, a method for performing pre-shipment discharge of one or more battery cells may include performing a first discharge stage on the one or more battery cells according to a first current value based on a predetermined discharge capacity; and performing a second discharge stage on the one or more battery cells according to a second current value which varies according to a detailed time period based on a predetermined voltage, wherein the first discharge stage and the second discharge stage are performed before shipping the one or more battery cells.

The performing the first discharge stage may include terminating the first discharge stage in the instance that the predetermined discharge capacity is reached while performing the first discharge stage.

The performing the second discharge stage may include terminating the second discharge stage for each battery cell in the instance that the voltage of each battery cell reaches the predetermined voltage while performing the second discharge stage.

The first current value may be greater than the second current value.

The second discharge stage may include three or more detailed discharge steps using the same or different charge and discharge rates.

A charge/discharge rate of the detailed discharge step temporally located last among the three or more detailed discharge steps included in the second discharge stage may be determined to be a smaller value than the charge/discharge rates applied to the remaining detailed discharge steps.

For example, the second discharge stage may include a first detailed discharge step in which discharging is performed using a first charge/discharge rate; a second detailed discharge step in which discharging is performed using a second charge/discharge rate; a third detailed discharge step in which discharging is performed using a third charge/discharge rate; a fourth detailed discharge step in which discharging is performed using a fourth charge/discharge rate; and a fifth detailed discharging step in which discharging is performed using a fifth charge/discharge rate.

According to an example, the first charge/-discharge rate, the second charge/discharge rate, the third charge/discharge rate, and the fourth charge/-discharge rate may be determined to be the same value, and the fifth charge/discharge rate may be determined to be smaller than the first charge/discharge rate, the second charge/discharge rate, the third charge/discharge rate, and the fourth charge/discharge rate.

According to another example, the first charge/-discharge rate, the second charge/discharge rate, the third charge/discharge rate, the fourth charge/discharge rate, and the fifth charge/discharge rate may be determined to be different values that decrease sequentially. Here, the third charge/discharge rate may be determined according to the first charge/discharge rate and the fifth charge/discharge rate.

Meanwhile, the method may further include fully charging the one or more battery cells before performing the first discharge stage.

[Advantageous Effects]

According to a battery pre-shipment discharge method according to embodiments of the present invention as described above, the voltage dispersion among battery cells can be improved and the process time required for pre-shipment discharging of battery can be shortened.

Accordingly, the effect of reducing investment costs for charge and discharge devices and improving the power cost of the activation process can be expected.

[Brief Description of the Drawings]

FIG. 1 is a schematic diagram of a battery manufacturing process to which the present invention may be applied.

FIG. 2 shows the concept of a general 1-step constant current discharge method, a flow of current used in the general 1-step constant current discharge method, and voltage change during the general 1-step constant current discharge process.

FIG. 3 shows the concept of a pre-shipment discharge method according to embodiments of the present invention, a flow of current used in the pre-shipment discharge method according to embodiments of the present invention, and voltage change during the pre-shipment discharge process according to embodiments of the present invention.

FIG. 4 is a block diagram of a pre-shipment discharge apparatus according to embodiments of the present invention.

FIG. 5 shows an operational sequence of a pre-shipment discharge method of battery according to embodiments of the present invention.

FIG. 6 shows experimental parameters and test results that are used to derive an optimal pre-shipment discharge process according to the present invention.

FIG. 7 shows test results for several experimental examples according to different experimental parameters used to derive the optimal pre-shipment discharge process according to the present invention.

FIG. 8 shows verification results for the optimal pre-shipment discharge method as preferred embodiments according to the present invention.

100: pre-shipment discharge apparatus
110: controller
120: charger/discharger
130: measuring unit

[Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

Terms used in the present application are used only to describe specific exemplary embodiments, and are not intended to limit the present invention. Singular expressions used herein include plurals expressions unless they have definitely opposite meanings in the context. In the present application, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

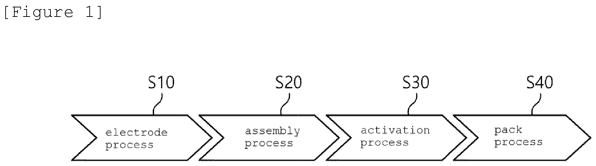

FIG. 1 is a schematic diagram of a battery manufacturing process to which the present invention may be applied.

Batteries may be manufactured through processes including electrode preparation (S10), assembly (S20), activation (S30), and packaging (S40). The battery manufactured through these processes is shipped in the form of a battery pack (or battery module) containing a plurality of battery cells connected in series. The battery pack may be connected to a load through positive and negative terminals and perform charging/discharging operations. Battery packs may be configured to be connected in series/parallel depending on the requirements of a system in which the battery is used.

More specifically, the electrode preparation process (S10) is a process of making a positive electrode and a negative electrode by mixing active electrode material, conductive material, and binder that make up the electrode after inputting raw materials. The assembly process (S20) is a process of making a finished cell by assembling the positive and negative plates manufactured through the electrode process with a separator. The manufacturing sequence may be different depending on the battery type (cylindrical, pouch, prismatic), and the technology applied by each manufacturer may also be different. In addition, the activation process (S30) is a process that activates electrical energy and obtains stability. The packaging process (S40) is a process of modularizing the manufactured battery cells and putting them into a pack.

Meanwhile, the activation process (S30) is performed by repeatedly aging and charging/discharging. In the 'aging' process, the battery is stored at room temperature with a constant temperature and humidity so that the electrolyte permeates the anode and cathode. When the electrolyte is dispersed inside the battery and ion movement between the anode and cathode becomes smooth, the battery is partially charged to activate the cell. Here, all lithium ions move to the cathode and the electrolyte decomposes, forming a thin, ion-conductive solid film on the electrode surface, which is 'SEI (Solid Electrolyte Interphase)' layer. The 'SEI' blocks the movement of electrons and allows only lithium ions to pass through, which is an important factor that increases the safety inside the battery and affects battery performance and lifespan.

The charged battery undergoes secondary aging at a high temperature of 40~70°C, which allows the SEI to become more stable and establish a uniform thickness. During this aging and charging, gas may be generated inside the battery and the generated gas goes through a process of 'degassing' to be removed.

After degassing, aging and charging are repeated several more times. Afterwards, the charge capacity is tested and defective batteries are selected. Lastly, the activation process is completed by going through a pre-shipment discharge process in which the battery is discharged at a predetermined charge rate (typically 0.1 to 1C (C-rate)) before shipping.

Here, the charge rate (C-rate) is a value that represents a speed at which the battery is charged or discharged, and is also called a charge/discharge rate. The unit of charge rate is C, which means capacity. The charge rate (C-rate) is a charge/discharge current (A) divided by the battery's rated capacity value (Ah), and the standard value of the charge rate is 1C.

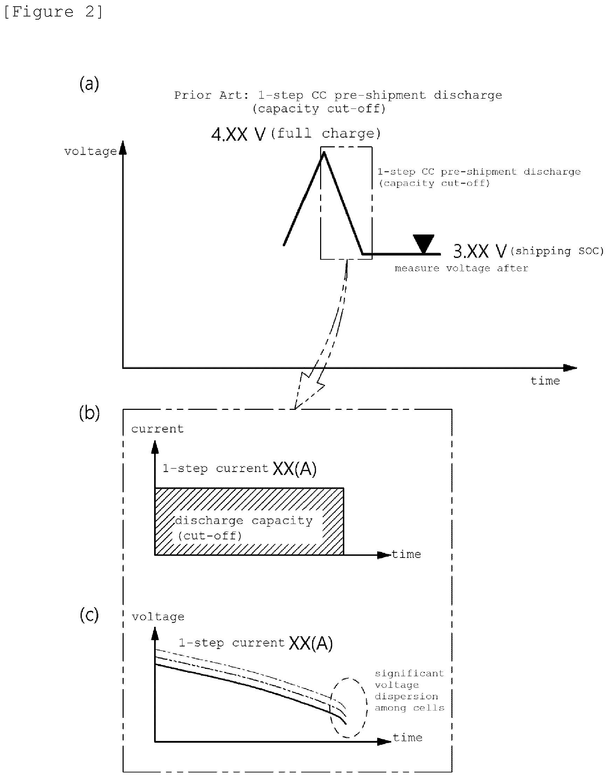

(a) of FIG. 2 is a diagram showing concept of a general 1-step constant current pre-shipment discharge method, (b) of FIG. 2 shows a flow of current used in the general 1-step constant current pre-shipment discharge method, and (c) of FIG. 2 shows voltage change of a plurality of cells during the general 1-step constant current pre-shipment discharge process.

The pre-shipment discharge method is one of the methods to match the shipping state of charge (SOC), which is a charge level of the cell at the time of shipment. Among the methods of setting the shipping SOC, the pre-shipment discharge method is a method of discharging the battery directly to the shipping SOC without going through full discharge. Here, the state of charge (SOC) is expressed as a percentage [%] of the charged state of the battery.

The example of (a) of FIG. 2 shows a pre-shipment discharge method using constant current (CC: Constant Current). Referring to (a) and (b) of FIG. 2, the battery cell is discharged at a constant rate after being fully charged to 4.xx V, and the discharging process ends when a certain amount of discharge (discharge capacity) is reached. Afterwards, the shipping SOC may be determined by a voltage (3.xx V in the example of FIG. 2) measured after a certain period of time (e.g., 1 day later).

Here, looking at the voltage change of each cell during the discharge process shown in (c) of FIG. 2, it is shown that that the voltage difference among the cells, that is, the inter-cell voltage dispersion, is significant.

In other words, the pre-shipment discharge method discharges the battery only up to the shipping SOC without going through full discharge, which can shorten charge and discharge time, but causes a quality risk as the voltage dispersion among cells further increases.

Meanwhile, among the methods of setting the shipping SOC, the pre-shipment charge method, which charges the battery cell again to the shipping SOC after full discharge, has the disadvantage of increasing the charge time because charging is performed after the battery cell is fully discharged.

As described above, when using a general pre-shipment discharge method or pre-shipment charge method, there occurs a problem of long charge and discharge time or quality risk.

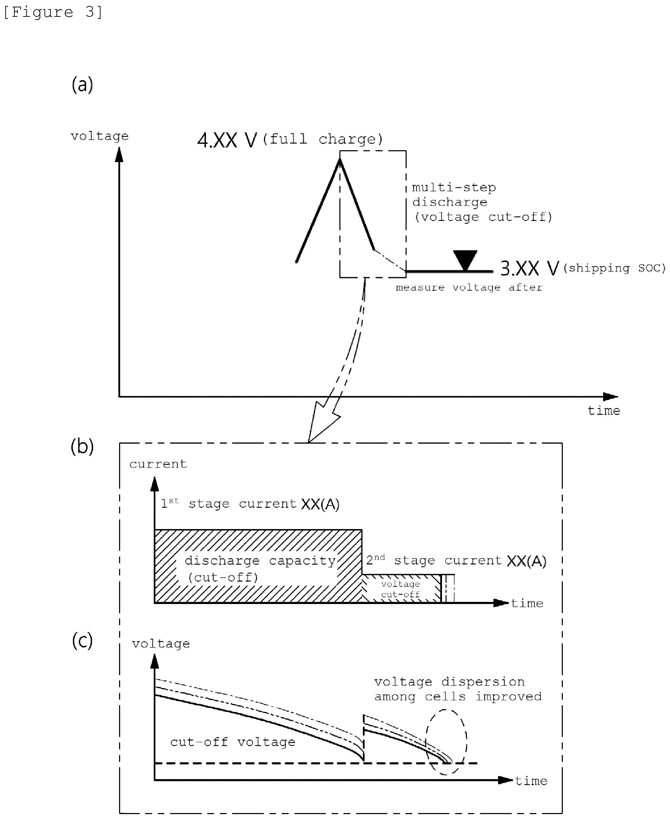

(a) of FIG. 3 is a diagram showing the concept of a pre-shipment discharge method according to embodiments of the present invention.

(b) of FIG. 3 shows a flow of current used in the pre-shipment discharge method according to embodiments of the present invention and (c) of FIG. 3 shows the voltage change of a plurality of cells during the pre-shipment discharge process according to embodiments of the present invention.

The pre-shipment discharge method according to embodiments of the present invention may include a discharge process spanning several steps. Referring to (a) of FIG. 3, the pre-shipment discharge method according to embodiments of the present invention may include a first discharge stage and a second discharge stage.

Referring to (a) and (b) of FIG. 3, in pre-shipment discharge according to embodiments of the present invention, discharging of the battery is performed using constant current (CC). However, the magnitude of the current applied to the first discharge stage and the magnitude of the current applied to the second discharge stage are different.

In more specific, in the first stage of discharge, the battery cell is discharged at a constant rate (first current) after being fully charged, and the discharging ends when a certain amount (discharge capacity) is discharged (cut-off discharge capacity). Thereafter, in the second stage of discharge, discharging is performed using a second current having a lower value than the first current, and the second discharge stage ends when the corresponding cell reaches a certain voltage (cut-off voltage).

Meanwhile, the second discharge stage includes a plurality of detailed discharge steps, and the number of detailed discharge steps included in the second discharge stage may be 3 or 5 according to preferred embodiments of the present invention.

Here, looking at the voltage change of each cell during the discharge process shown in (c) of FIG. 3, it is shown that the voltage dispersion among cells is significantly reduced as the discharge progresses. In addition, at the point when the pre-shipment discharge is completed, it is shown that the voltage dispersion among cells is noticeably improved compared to the case of using the general pre-shipment discharge method shown in (c) of FIG. 2.

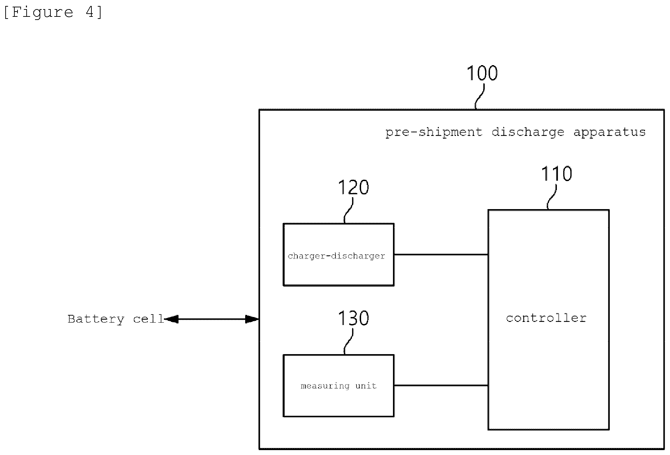

FIG. 4 is a block diagram of a pre-shipment discharge apparatus according to embodiments of the present invention.

Referring to FIG. 4, the pre-shipment discharge apparatus 100 according to embodiments of the present invention may be configured to include a controller 110, a charger-discharger 120, and a measuring unit 130.

The battery cell herein may be one or more battery cells that are undergoing a manufacturing process, particularly an activation process. The charger-discharger 120 may perform charging and discharging operations on one or more battery cells under the control of the controller 110. The measurement unit 130 may measure a voltage and discharge capacity of a battery cell that is being charged or discharged through the charger-discharger 120 and provide the measurement data to the controller 110.

The controller 110 may control the charger-discharger 120 to control charging and discharging operations on the battery cell. According to embodiments of the present invention, the controller 110 may first fully charge the battery cell (for example, to 4.xx V). The controller 110 may control the charger-discharger 120 to perform a first discharge stage based on the discharge capacity of the battery cell input from the measurement unit 130, and then to perform a second discharge stage based on the measured voltage of the battery cell. A certain rest-time may be given between the first discharge stage and the second discharge stage.

Here, the controller 110 may end the first discharge stage when a predetermined reference discharge capacity is reached while performing the first discharge stage. The discharge capacity may be determined according to the discharge current and the discharge time, and the first discharge stage is completed and terminated in the instance that the discharge is performed by the amount equal to a predetermined reference discharge capacity.

In addition, the controller may terminate the second discharge stage for each battery cell when the voltage of each battery cell reaches a preset voltage while performing the second discharge stage.

Here, the first current value used for the first discharge stage is greater than the second current value used for the second discharge stage. In other words, the first discharge stage may be performed using a higher rate constant current whereas the second discharge stage may be performed using a lower rate constant current.

Meanwhile, the second discharge stage according to embodiments of the present invention may include three or more detailed discharge steps using the same or different charge/discharge rates. Accordingly, the second current applied to the second discharge stage may have a value that changes depending on the detailed time period.

Here, the charge/discharge rate of the detailed discharge step temporally located last among the detailed discharge steps may be set to a smaller value than the charge/discharge rates applied to the other detailed discharge steps.

According to one embodiment, when the second discharge stage includes three detailed discharge steps, the second discharge stage may include: a first detailed discharge step that performs discharge using a first charge/discharge rate; a second detailed discharge step that performs discharge using a second charge/discharge rate; and a third detailed discharge step that performs discharge using a third charge/discharge rate.

Here, the first charge/discharge rate and the second charge/discharge rate may be set to the same value, and the third charge/discharge rate may be set to a value smaller than the first charge/discharge rate and the second charge/discharge rate. Moreover, the second charge/discharge rate may be set to a value smaller than the first charge/discharge rate.

According to another embodiment, in the case of the second discharge stage with five detailed discharge steps, the second discharge stage may include a first detailed discharge step that performs discharge using a first charge/discharge rate; a second detailed discharge step that performs discharge using a second charge/discharge rate; a third detailed discharge step that performs discharge using a third charge/discharge rate; a fourth detailed discharge step that performs discharge using a fourth charge/discharge rate; and a fifth detailed discharge step of performing discharge using a fifth charge/discharge rate.

Here, the first charge/discharge rate, the second charge/discharge rate, the third charge/discharge rate, and the fourth charge/discharge rate are set to the same value, and the fifth charge/discharge rate may be set to a lower value than the first charge/discharge rate, the second charge/discharge rate, the third charge/discharge rate and the fourth charge/discharge rate.

According to another embodiment, the first charge/discharge rate, the second charge/discharge rate, the third charge/discharge rate, the fourth charge/discharge rate, and the fifth charge/discharge rate may be determined to be different values that are sequentially lowered.

Here, the third charge/discharge rate may be determined according to the first charge/discharge rate and the fifth charge/discharge rate. In other words, the current corresponding to the third charge/discharge rate may be determined according to the current corresponding to the first charge/discharge rate and the current corresponding to the fifth charge/discharge rate, for example, may be determined according to Equation 1 below.

[Equation 1]

$$I_3 = \sqrt{I_1 \times I_5}$$

In Equation 1, $I_3$ represents the current corresponding to the third charge/discharge rate, $I_1$ represents the current corresponding to the first charge/discharge rate, and $I_5$ represents the current corresponding to the fifth charge/discharge rate.

Meanwhile, the charge/discharge rate (C-rate) is a value obtained by dividing the charge/discharge current (A) by the battery's rated capacity value (Ah), and it may be understood as the same meaning as the battery discharge rate in the present specification. Since the rated capacity of the battery is fixed, the charge/-discharge rate may correspond to the charge/discharge current.

In this specification, the controller may be a processor, any type of controller, or a main control unit (MCU), etc., and may also mean a dedicated processor on which methods according to embodiments of the present invention are performed.

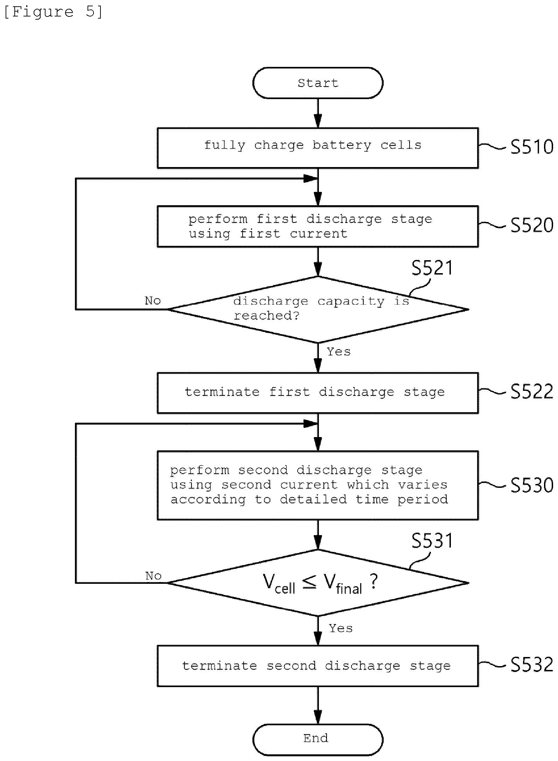

FIG. 5 shows an operational sequence of a pre-shipment discharge method of battery according to embodiments of the present invention.

The pre-shipment discharge method of battery shown in FIG. 5 may be performed by a battery pre-shipment discharge apparatus or a controller within the battery pre-shipment discharge apparatus. In this embodiment, the operating entity is described as a controller for convenience of explanation, but the operating entity of the pre-shipment discharge method of battery according to the present invention is not limited thereto.

The controller may fully charge one or more battery cells in the activation process (S510). Thereafter, the controller may perform a first discharge stage on the one or more battery cells according to a first current value based on the predetermined discharge capacity (S520), and the first discharge stage may be terminated (S522) in the instance that the predetermined discharge capacity is reached during the first discharge stage (S521).

The controller may perform a second discharge stage on one or more battery cells according to a second current value which varies according to a detailed segmented time period based on a predetermined voltage after performing the first discharge stage (S530). As the discharge progresses, the voltage of each battery cell gradually decreases. When the voltage ($V_{cell}$) of each battery cell reaches a preset voltage ($V_{final}$) during the second discharge stage (S531), the second discharge stage may be terminated for each battery cell (S532).

Here, the first current value may be greater than the second current value. In other words, the first discharge stage may be a discharge stage using a higher rate constant current whereas the second discharge stage may be a discharge stage using a lower rate constant current.

Meanwhile, the second discharge stage according to embodiments of the present invention may include three or more detailed discharge steps using the same or different charge/discharge rates. Accordingly, the second current applied to the second discharge stage may have a value that changes depending on the detailed segmented time period.

According to an embodiment, the charge/-discharge rate of the detailed discharge step located temporally last among three or more detailed discharge steps included in the second discharge stage may be determined to be a value smaller than the charge/-discharge rate applied to the other detailed discharge steps.

According to an embodiment, in the case that the second discharge stage includes three detailed discharge steps, the second discharge stage may include: a first detailed discharge step that performs discharge using a first charge/discharge rate; a second detailed discharge step that performs discharge using a second charge/discharge rate; and a third detailed discharge step that performs discharge using a third charge/-discharge rate.

Here, the first charge/discharge rate and the second charge/discharge rate may be set to the same value, and the third charge/discharge rate may be set to a value smaller than the first charge/discharge rate and the second charge/discharge rate. Alternatively, the second charge/discharge rate may be set to a value smaller than the first charge/discharge rate.

According to another embodiment, in the case of the second discharge stage with five detailed discharge steps, the second discharge stage may include a first detailed discharge step that performs discharge using a first charge/discharge rate; a second detailed discharge step that performs discharge using a second charge/discharge rate; a third detailed discharge step that performs discharge using a third charge/discharge rate; a fourth detailed discharge step that performs discharge using a fourth charge/discharge rate; and a fifth detailed discharge step of performing discharge using a fifth charge/discharge rate.

Here, the first charge/discharge rate, the second charge/discharge rate, the third charge/discharge rate, and the fourth charge/discharge rate are set to the same value, and the fifth charge/discharge rate may be set to a lower value than the first charge/discharge rate, the second charge/discharge rate, the third charge/-discharge rate and the fourth charge/discharge rate.

According to another embodiment, the first charge/discharge rate, the second charge/discharge rate, the third charge/discharge rate, the fourth charge/-discharge rate, and the fifth charge/discharge rate may be determined to be different values that are sequentially lowered.

Here, the third charge/discharge rate may be determined according to the first charge/discharge rate and the fifth charge/discharge rate. In other words, the current corresponding to the third charge/discharge rate may be determined according to the current corresponding to the first charge/discharge rate and the current corresponding to the fifth charge/discharge rate. For example, the current corresponding to the third charge/-discharge rate may be determined according to Equation 1 as discussed earlier.

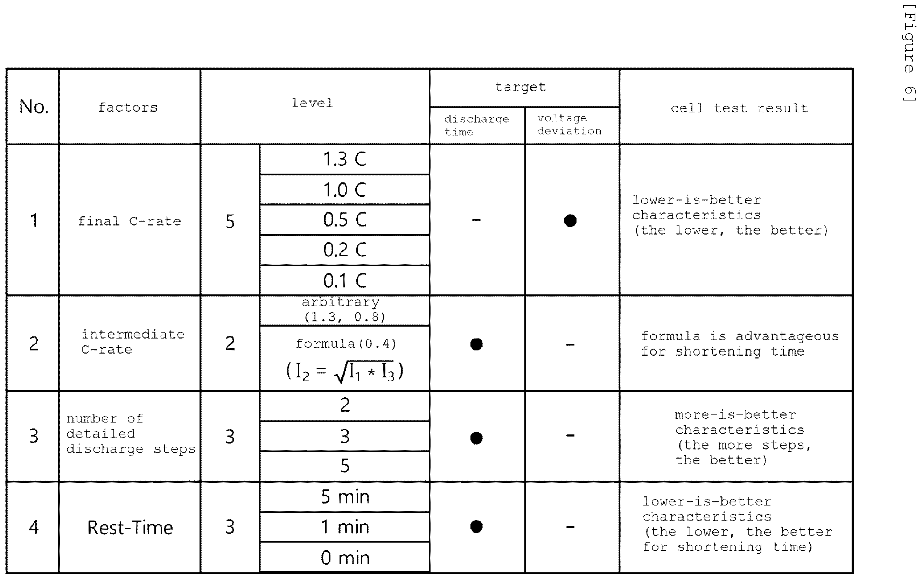

FIG. 6 shows experimental parameters and test results that are used to derive an optimal pre-shipment discharge process according to the present invention.

The inventor of the present invention conducted various experiments to determine what factors related to the pre-shipment discharge process affect the discharge time and the voltage standard deviation. The experiments are related to the second discharge stage that includes three or more detailed discharge steps using the same or different charge/discharge rates.

Referring to FIG. 6, the main experimental factors considered in the experiments are the final C-rate (charge/discharge rate) applied to the last detailed discharge step among the multiple detailed discharge steps in the second discharge stage, the intermediate C-rate (charge/discharge rate) applied to a middle detailed discharge step, a number of detailed discharge steps, and rest time between the detailed discharge steps. The final C-rate may be a factor related to voltage deviation, and the intermediate C-rate, the number of detailed discharge steps, and the rest time between the detailed discharge steps may be identified as factors related to the discharge time.

In the experiments, five different C-rate levels of 1.3C, 1.0C, 0.5C, 0.2C, and 0.1C were tested for the final C-rate. For the intermediate C-rate, two levels were tested: one was an arbitrary value (1.3C, 0.8C), and the other was a value derived using a formula.

Here, the formula applied to the intermediate C-rate value may be Equation 1 discussed above. In other words, the intermediate C-rate value may be determined according to the C-rate of the detailed discharge step that temporally proceeds first within the second discharge stage and the C-rate of the detailed discharge step that temporally proceeds last within the second discharge stage.

In addition, the experiment was conducted with the number of detailed discharge steps which are set to 2, 3, and 5, and the rest time was set to 5 minutes (5 min), 1 minute (1 min), and 0.

As a result of the cell tests, in the case of the final C-rate, the experiments indicated that the lower the value, the smaller the voltage deviation, which means the better. In addition, in the case of the intermediate C-rate, the experiments indicated that the value determined according to the C-rate of the detailed discharge step that proceeds temporally first within the second discharge stage and the C-rate of the detailed discharge step that proceeds temporally last within the second discharge stage, is advantageous to shorten the discharge time.

In addition, the more the number of detailed discharge steps, the more advantageous it is in terms of discharge time. Moreover, the lower the rest time, the more advantageous it is to shorten the discharge time.

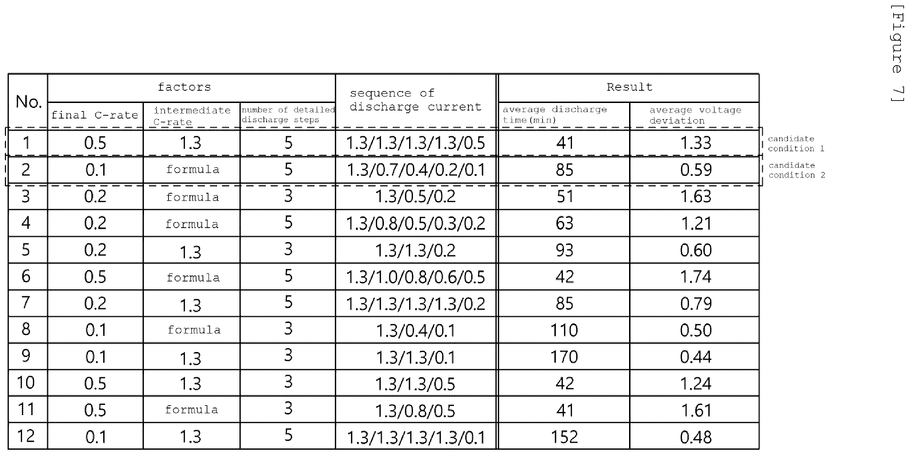

FIG. 7 shows test results for several experimental examples according to different experimental parameters used to derive the optimal pre-shipment discharge process according to the present invention.

FIG. 7 indicates the results of the tests that derive the discharge time and the voltage standard deviation values for each experimental example, in order to determine performances of various experimental examples (No. 1 to No. 12) consisting of a combination of desirable experimental factors derived through the experiment in FIG. 6.

In the experimental examples, three or five detailed discharge steps were used, a low value of 0.1 to 0.5 was used for the final C-rate, and a value derived by the formula according to Equation 1 or an arbitrary value of 1.3C was used for the intermediate C-rate.

The target discharge time was set to less than 70 min, the target voltage standard deviation value was set to less than 1.0, and candidates which satisfy these target conditions were first selected.

As a result of the tests, among the experimental examples shown in FIG. 7, more desirable results were obtained in the experimental example with 5 detailed discharge steps. More specifically, among them, the experimental example of case 1 with charge/discharge rates (corresponding to the discharge current) for detailed discharge steps 1 to 5 were 1.3/1.3/1.3/1.3/0.5 and the experimental example of case 2 with 1.3/0.7/0.4/0.2/0.1 were shown to be the most desirable combination.

Case 1 is more advantageous than Case 2 in terms of the average discharge time and Case 2 is more advantageous than Case 1 in terms of the average voltage deviation.

Through the tests of FIGS. 6 and 7, it is shown that it is desirable to set the charge/discharge rate of the detailed discharge step located temporally last among the three or more detailed discharge steps included in the second discharge stage to a value smaller than those of the remaining detailed discharge steps before the last detailed discharge steps.

In addition, in the instance that the second discharge stage includes five detailed discharge steps, desirable results can be obtained from two cases in terms of discharge time and voltage standard deviation. One case is that the first charge/discharge rate, the second charge/discharge rate, the third charge/discharge rate, and the fourth charge/discharge rate are set to the same value, and the fifth charge/discharge rate is set to a value smaller than the first charge/discharge rate, the second charge/discharge rate, the third charge/discharge rate, and the fourth charge/discharge rate. The other case is that the first charge/discharge rate, the second charge/-discharge rate, the third charge/discharge rate, the fourth charge/discharge rate, and the fifth charge/discharge rate are set to different values that are sequentially lowered.

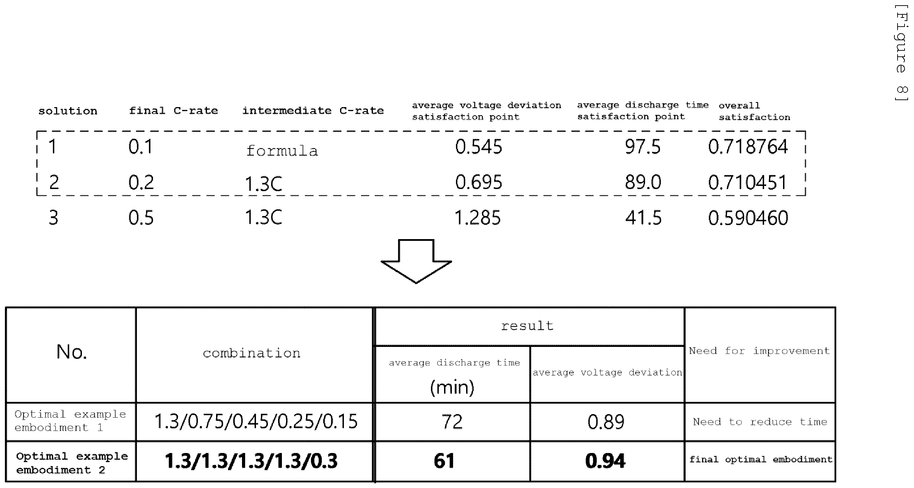

FIG. 8 shows verification results for the optimal pre-shipment discharge method as preferred embodiments according to the present invention.

Based on the preferred discharge parameter combination derived from the experimental examples in FIG. 7, two optimal examples as shown in FIG. 8 are derived using a statistical process optimization solution.

The average voltage deviation and the average discharge time are used as evaluation data to derive the final two optimal examples. For candidate solutions (including 5 detailed discharge steps, specified final C-rate and intermediate C-rate values), the average voltage deviation standard value and the average discharge time standard value are individually calculated, and the final optimal examples are derived by deriving a satisfaction value in consideration of the average voltage deviation and the average discharge time comprehensively.

The final two optimal embodiments as shown in FIG. 8 are derived. Optimal example embodiment 1 has the second discharge stage process with charge rates of 1.3/0.75/0.45/0.25/0.15, and optimal example embodiment 2 has the second discharge stage process with charge rates of 1.3/1.3/1.3/1.3/0.3.

Optimal example embodiment 1 shows that the average discharge time is 72 minutes and the average voltage deviation is 0.89, requiring further improvement in the discharge time. In addition, optimal example embodiment 2 is found to satisfy both the target discharge time (less than 70 min) and target voltage standard deviation (less than 1.0) with an average discharge time of 61 minutes and an average voltage deviation of 0.94.

A test discharge process was performed on one or more battery cells according to optimal example embodiment 2, and the voltage dispersion of the battery cells in the tray as shipped was identified to be 0.9 mV. Considering that the voltage dispersion when using a typical discharge method is 2.4V, it can be understood that an improvement in voltage dispersion of approximately 63% is achieved. In addition, the charge and discharge time is reduced by 10.4%, resulting in a savings of approximately 3.1 billion won in investment costs, and the battery activation process power cost is improved by 10%.

According to optimal example embodiment 1, the first charge/discharge rate, the second charge/-discharge rate, the third charge/discharge rate, the fourth charge/discharge rate, and the fifth charge/discharge rate may be set to different values that are sequentially lowered.

According to optimal example embodiment 2, the first charge/discharge rate, the second charge/-discharge rate, the third charge/discharge rate, and the fourth charge/discharge rate are set to the same value, and the fifth charge/discharge rate may be set to a value lower than the first charge/discharge rate, the second charge/discharge rate, the third charge/discharge rate, and the fourth charge/discharge rate.

In summary, the common feature of optimal example embodiment 1 and optimal example embodiment 2 is that the charge/discharge rate of the detailed discharge step located temporally last among the detailed discharge steps is smaller than the charge/-discharge rate applied to the other previous detailed discharge steps.

Optimal example embodiment 1 shows better results in terms of voltage deviation and optimal example embodiment 2 shows better results in terms of discharge time. Therefore, the optimal example embodiment 2 can be selected for the battery activation process in a situation where improvement in the discharge time is more required than the voltage deviation. Furthermore, the optimal example embodiment 1 can be selected for the battery activation process in a situation where the voltage deviation improvement is more required than the discharge time.

By using the battery pre-shipment discharge apparatus and method of the present invention as seen through the above embodiments, the voltage dispersion between battery cells can be improved and the process time required for pre-shipment discharging can be shortened. Accordingly, the effect of reducing investment costs for chargers and dischargers and improving the power cost of the activation process can be expected.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, etc. The program instructions may include not only machine language code created by a compiler, but also high-level language code that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. An apparatus for performing pre-shipment discharge of one or more battery cells, the apparatus comprising:

   a charger-discharger connected to the one or more battery cells and configured to charge or discharge the one or more battery cells;
   a controller configured to control the charger-discharger to perform a first discharge stage on the one or more battery cells according to a first current value based on a predetermined discharge capacity and to perform a second discharge stage on the one or more battery cells according to a second current value which varies according to a detailed time period based on a predetermined voltage; and
   a measuring unit configured to monitor each battery cell and provide related measurement values to the controller;
   wherein the controller controls the charger-discharger to perform the first discharge stage and the second discharge stage before shipping the one or more battery cells.

2. The apparatus of claim 1, wherein the controller terminates the first discharge stage in the instance that the predetermined discharge capacity is reached while performing the first discharge stage.

3. The apparatus of claim 1, wherein the controller terminates the second discharge stage for each battery cell in the instance that the voltage of each battery cell reaches the predetermined voltage while performing the second discharge stage.

4. The apparatus of claim **1,** wherein the first current value is greater than the second current value.

5. The apparatus of claim 1, wherein the second discharge stage includes three or more detailed discharge steps using the same or different charge and discharge rates.

6. The apparatus of claim 5, wherein a charge/-

discharge rate of the detailed discharge step temporally located last among the three or more detailed discharge steps included in the second discharge stage is determined to be a smaller value than the charge/discharge rates applied to the remaining detailed discharge steps.

7. The apparatus of claim 5, wherein the second discharge stage includes:

   a first detailed discharge step in which discharging is performed using a first charge/discharge rate;
   a second detailed discharge step in which discharging is performed using a second charge/-discharge rate;
   a third detailed discharge step in which discharging is performed using a third charge/discharge rate;
   a fourth detailed discharge step in which discharging is performed using a fourth charge/-discharge rate; and
   a fifth detailed discharging step in which discharging is performed using a fifth charge/discharge rate.

8. The apparatus of claim 7, wherein the first charge/-discharge rate, the second charge/discharge rate, the third charge/discharge rate, and the fourth charge/discharge rate are determined to be the same value, and
   wherein the fifth charge/discharge rate is determined to be smaller than the first charge/discharge rate, the second charge/discharge rate, the third charge/-discharge rate, and the fourth charge/discharge rate.

9. The apparatus of claim 7, wherein the first charge/-discharge rate, the second charge/discharge rate, the third charge/discharge rate, the fourth charge/-discharge rate, and the fifth charge/discharge rate are determined to be different values that decrease sequentially.

10. The apparatus of claim 9, wherein the third charge/-discharge rate is determined according to the first charge/discharge rate and the fifth charge/discharge rate.

11. The apparatus of claim 1, wherein the controller fully charges the one or more battery cells before performing the first discharge stage.

12. A method for performing pre-shipment discharge of one or more battery cells, the method comprising:

   performing a first discharge stage on the one or more battery cells according to a first current value based on a predetermined discharge capacity; and

performing a second discharge stage on the one or more battery cells according to a second current value which varies according to a detailed time period based on a predetermined voltage,

wherein the first discharge stage and the second discharge stage are performed before shipping the one or more battery cells.

13. The method of claim 12, wherein the performing the first discharge stage includes terminating the first discharge stage in the instance that the predetermined discharge capacity is reached while performing the first discharge stage.

14. The method of claim 12, wherein the performing the second discharge stage includes terminating the second discharge stage for each battery cell in the instance that the voltage of each battery cell reaches the predetermined voltage while performing the second discharge stage.

15. The method of claim 12, wherein the first current value is greater than the second current value.

16. The method of claim 12, wherein the second discharge stage includes three or more detailed discharge steps using the same or different charge and discharge rates.

17. The method of claim 16, wherein a charge/discharge rate of the detailed discharge step temporally located last among the three or more detailed discharge steps included in the second discharge stage is determined to be a smaller value than the charge/-discharge rates applied to the remaining detailed discharge steps.

18. The method of claim 16, wherein the second discharge stage includes:

a first detailed discharge step in which discharging is performed using a first charge/discharge rate;
a second detailed discharge step in which discharging is performed using a second charge/-discharge rate;
a third detailed discharge step in which discharging is performed using a third charge/discharge rate;
a fourth detailed discharge step in which discharging is performed using a fourth charge/-discharge rate; and
a fifth detailed discharging step in which discharging is performed using a fifth charge/discharge rate.

19. The method of claim 18, wherein the first charge/-discharge rate, the second charge/discharge rate, the third charge/discharge rate, and the fourth charge/discharge rate are determined to be the same value, and

wherein the fifth charge/discharge rate is determined to be smaller than the first charge/discharge rate, the second charge/discharge rate, the third charge/-discharge rate, and the fourth charge/discharge rate.

20. The method of claim 18, wherein the first charge/-discharge rate, the second charge/discharge rate, the third charge/discharge rate, the fourth charge/-discharge rate, and the fifth charge/discharge rate are determined to be different values that decrease sequentially.

21. The method of claim 20, wherein the third charge/-discharge rate is determined according to the first charge/discharge rate and the fifth charge/discharge rate.

22. The method of claim 12, further comprising fully charging the one or more battery cells before performing the first discharge stage.

[Figure 1]

S10 electrode process → S20 assembly process → S30 activation process → S40 pack process

[Figure 2]

(a)

Prior Art: 1-step CC pre-shipment discharge
(capacity cut-off)

4.XX V (full charge)

voltage

1-step CC pre-shipment discharge
(capacity cut-off)

3.XX V (shipping SOC)
measure voltage after

time

(b)

current

1-step current XX(A)

discharge capacity
(cut-off)

time

(c)

voltage

1-step current XX(A)

significant
voltage
dispersion
among cells

time

[Figure 3]

(a)

voltage

4.XX V (full charge)

multi-step
discharge
(voltage cut-off)

3.XX V (shipping SOC)

measure voltage after

time

(b)

current

1st stage current XX(A)

discharge capacity
(cut-off)

2nd stage current XX(A)

voltage
cut-off

time

(c)

voltage

voltage dispersion
among cells improved

cut-off voltage

time

[Figure 4]

[Figure 5]

```
                    ┌─────────────┐
                    │    Start    │
                    └──────┬──────┘
                           ▼
          ┌────────────────────────────────┐
          │   fully charge battery cells   │────── S510
          └────────────────┬───────────────┘
     ┌─────────────────────▼──────────────┐
     │   ┌────────────────────────────────┐
     │   │  perform first discharge stage │────── S520
     │   │  using first current           │
     │   └────────────────┬───────────────┘
     │                    ▼          S521
     │          ╱─────────────────────╲
     │   No    ╱  discharge capacity is ╲
     └────────╱       reached?           ╲
              ╲                          ╱
               ╲────────────┬──────────╱
                            │ Yes
                            ▼
          ┌────────────────────────────────┐
          │  terminate first discharge stage│────── S522
          └────────────────┬───────────────┘
     ┌─────────────────────▼──────────────┐
     │   ┌────────────────────────────────┐
     │   │ perform second discharge stage │
     │   │ using second current which varies│──── S530
     │   │ according to detailed time period│
     │   └────────────────┬───────────────┘
     │                    ▼          S531
     │          ╱─────────────────────╲
     │   No    ╱                        ╲
     └────────╱   V_cell ≤ V_final ?     ╲
              ╲                          ╱
               ╲────────────┬──────────╱
                            │ Yes
                            ▼
          ┌────────────────────────────────┐
          │ terminate second discharge stage│──── S532
          └────────────────┬───────────────┘
                           ▼
                    ┌─────────────┐
                    │     End     │
                    └─────────────┘
```

$V_{cell} \leq V_{final}$ ?

[Figure 6]

EP 4 525 264 A1

| No. | factors | | level | target | | cell test result |
|---|---|---|---|---|---|---|
| | | | | discharge time | voltage deviation | |
| 1 | final C-rate | 5 | 1.3 C<br>1.0 C<br>0.5 C<br>0.2 C<br>0.1 C | - | ● | lower-is-better characteristics (the lower, the better) |
| 2 | intermediate C-rate | 2 | arbitrary (1.3, 0.8)<br>formula(0.4) $\left(I_2 = \sqrt{I_1 * I_3}\right)$ | ● | - | formula is advantageous for shortening time |
| 3 | number of detailed discharge steps | 3 | 2<br>3<br>5 | ● | - | more-is-better characteristics (the more steps, the better) |
| 4 | Rest-Time | 3 | 5 min<br>1 min<br>0 min | ● | - | lower-is-better characteristics (the lower, the better for shortening time) |

[Figure 7]

EP 4 525 264 A1

| No. | factors | | | sequence of discharge current | Result | | |
|---|---|---|---|---|---|---|---|
| | final C-rate | intermediate C-rate | number of detailed discharge steps | | average discharge time(min) | average voltage deviation | |
| 1 | 0.5 | 1.3 | 5 | 1.3/1.3/1.3/1.3/0.5 | 41 | 1.33 | candidate condition 1 |
| 2 | 0.1 | formula | 5 | 1.3/0.7/0.4/0.2/0.1 | 85 | 0.59 | candidate condition 2 |
| 3 | 0.2 | formula | 3 | 1.3/0.5/0.2 | 51 | 1.63 | |
| 4 | 0.2 | formula | 5 | 1.3/0.8/0.5/0.3/0.2 | 63 | 1.21 | |
| 5 | 0.2 | 1.3 | 3 | 1.3/1.3/0.2 | 93 | 0.60 | |
| 6 | 0.5 | formula | 5 | 1.3/1.0/0.8/0.6/0.5 | 42 | 1.74 | |
| 7 | 0.2 | 1.3 | 5 | 1.3/1.3/1.3/1.3/0.2 | 85 | 0.79 | |
| 8 | 0.1 | formula | 3 | 1.3/0.4/0.1 | 110 | 0.50 | |
| 9 | 0.1 | 1.3 | 3 | 1.3/1.3/0.1 | 170 | 0.44 | |
| 10 | 0.5 | 1.3 | 3 | 1.3/1.3/0.5 | 42 | 1.24 | |
| 11 | 0.5 | formula | 3 | 1.3/0.8/0.5 | 41 | 1.61 | |
| 12 | 0.1 | 1.3 | 5 | 1.3/1.3/1.3/1.3/0.1 | 152 | 0.48 | |

[Figure 8]

EP 4 525 264 A1

| solution | final C-rate | intermediate C-rate | average voltage deviation satisfaction point | average discharge time satisfaction point | overall satisfaction |
|---|---|---|---|---|---|
| 1 | 0.1 | formula | 0.545 | 97.5 | 0.718764 |
| 2 | 0.2 | 1.3C | 0.695 | 89.0 | 0.710451 |
| 3 | 0.5 | 1.3C | 1.285 | 41.5 | 0.590460 |

| No. | combination | result | | Need for improvement |
|---|---|---|---|---|
| | | average discharge time (min) | average voltage deviation | |
| Optimal example embodiment 1 | 1.3/0.75/0.45/0.25/0.15 | 72 | 0.89 | Need to reduce time |
| **Optimal example embodiment 2** | **1.3/1.3/1.3/1.3/0.3** | **61** | **0.94** | final optimal embodiment |

## INTERNATIONAL SEARCH REPORT

| International application No. |
|---|
| **PCT/KR2024/001272** |

### A. CLASSIFICATION OF SUBJECT MATTER

**H02J 7/00**(2006.01)i; **H01M 10/44**(2006.01)i

According to International Patent Classification (IPC) or to both national classification and IPC

### B. FIELDS SEARCHED

Minimum documentation searched (classification system followed by classification symbols)

H02J 7/00(2006.01); H01M 10/04(2006.01); H01M 10/30(2006.01); H01M 10/44(2006.01); H01M 2/10(2006.01); H01M 4/36(2006.01); H02J 7/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 충전(charging), 방전(discharging), 전압(voltage), 배터리 용량 (battery capacity)

### C. DOCUMENTS CONSIDERED TO BE RELEVANT

| Category* | Citation of document, with indication, where appropriate, of the relevant passages | Relevant to claim No. |
|---|---|---|
| Y | JP 6608523 B2 (KANEKA CORP.) 20 November 2019 (2019-11-20)<br>See paragraphs [0090]-[0099], [0125] and [0152]-[0154]; and figures 2a-2b. | 1-7,11-18,22 |
| A | | 8-10,19-21 |
| Y | KR 10-2015-0026171 A (LG CHEM, LTD.) 11 March 2015 (2015-03-11)<br>See paragraphs [0018]-[0023], [0032]-[0035], [0041]-[0043] and [0049]-[0052]; and figure 4. | 1-7,11-18,22 |
| A | KR 10-1998-0012688 A (SAMSUNG SDI CO., LTD.) 30 April 1998 (1998-04-30)<br>See pages 1-3; and tables 1-4. | 1-22 |
| A | US 2016-0233691 A1 (TOYOTA JIDOSHA KABUSHIKI KAISHA) 11 August 2016 (2016-08-11)<br>See entire document. | 1-22 |
| A | JP 2015-173039 A (TOYOTA MOTOR CORP.) 01 October 2015 (2015-10-01)<br>See entire document. | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 May 2024** | **23 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2024/001272**

| Patent document cited in search report | | | Publication date (day/month/year) | Patent family member(s) | | | Publication date (day/month/year) |
|---|---|---|---|---|---|---|---|
| JP | 6608523 | B2 | 20 November 2019 | CN | 108701792 | A | 23 October 2018 |
| | | | | US | 2020-0303732 | A1 | 24 September 2020 |
| | | | | WO | 2017-170683 | A1 | 05 October 2017 |
| KR | 10-2015-0026171 | A | 11 March 2015 | | None | | |
| KR | 10-1998-0012688 | A | 30 April 1998 | | None | | |
| US | 2016-0233691 | A1 | 11 August 2016 | BR | 102016002376 | A2 | 16 August 2016 |
| | | | | BR | 102016002376 | B1 | 08 February 2022 |
| | | | | CN | 105870523 | A | 17 August 2016 |
| | | | | CN | 105870523 | B | 18 December 2018 |
| | | | | EP | 3057195 | A1 | 17 August 2016 |
| | | | | EP | 3057195 | B1 | 30 September 2020 |
| | | | | JP | 2016-149211 | A | 18 August 2016 |
| | | | | JP | 6299623 | B2 | 28 March 2018 |
| | | | | KR | 10-1712523 | B1 | 06 March 2017 |
| | | | | KR | 10-2016-0098081 | A | 18 August 2016 |
| | | | | US | 10033216 | B2 | 24 July 2018 |
| JP | 2015-173039 | A | 01 October 2015 | JP | 6210317 | B2 | 11 October 2017 |

Form PCT/ISA/210 (patent family annex) (July 2022)

**REFERENCES CITED IN THE DESCRIPTION**

**Patent documents cited in the description**

- KR 1020230012727